# EUROPEAN PATENT SPECIFICATION

(11) **EP 3 510 831 B1**
(45) Date of publication and mention of the grant of the patent: **10.03.2021**
(21) Application number: 18849437.1
(22) Date of filing: 01.08.2018
(51) Int. Cl.: H04W 76/15, H04W 48/12

(54) **METHODS FOR SYSTEM INFORMATION, USER EQUIPMENT AND COMPUTER READABLE MEDIUM**
VERFAHREN FÜR SYSTEMINFORMATIONEN, BENUTZERGERÄT UND COMPUTERLESBARES MEDIUM
PROCÉDÉS D'INFORMATION SYSTÈME, ÉQUIPEMENT UTILISATEUR ET SUPPORT LISIBLE PAR ORDINATEUR

(30) Priority: 30.11.2017 US 201762592694 P
(43) Date of publication of application: 17.07.2019
(73) Proprietor: GUANGDONG OPPO MOBILE TELECOMMUNICATIONS CORP., LTD., Wusha, Chang'an Dongguan, Guangdong 523860 (CN)
(72) Inventor: LEI, Yixue, Dongguan Guangdong 523860 (CN); YANG, Ning, Dongguan Guangdong 523860 (CN)
(74) Representative: Manitz Finsterwald Patent- und Rechtsanwaltspartnerschaft mbB
(86) International application number: PCT/CN2018/098121
(87) International publication number: WO 2019/105056

(56) References cited:
- CN-A- 105 009 678
- US-A1- 2014 335 882
- US-A1- 2017 064 590
- NEC: "AS support for 5G indication", 3GPP DRAFT; R2-1708228_5G INDICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Berlin, Germany; 20170821 - 20170825 20 August 2017 (2017-08-20), XP051318130, Retrieved from the Internet: URL:http://www.3gpp.org/ftp/Meetings_3GPP_ SYNC/RAN2/Docs/ [retrieved on 2017-08-20]
- ERICSSON: "Introducing 5G indication in LTE RRC SIB", 3GPP DRAFT; R2-1710512 - INTRODUCING 5G INDICATION IN LTE RRC SIB, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN , vol. RAN WG2, no. Prague, Czech Republic; 20171009 - 20171013 8 October 2017 (2017-10-08), XP051342555, Retrieved from the Internet: URL:http://www.3gpp.org/ftp/Meetings_3GPP_ SYNC/RAN2/Docs/ [retrieved on 2017-10-08]
- ERICSSON: "5G indicator for EN-DC", 3GPP DRAFT; R2-1713443 - 5G INDICATOR FOR EN-DC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, Nevada, USA; 20171127 - 20171201 17 November 2017 (2017-11-17), XP051372166, Retrieved from the Internet: URL:http://www.3gpp.org/ftp/tsg%5Fran/WG2% 5FRL2/TSGR2%5F100/Docs/ [retrieved on 2017-11-17]
- VODAFONE: "5G Availability Indicator", 3GPP DRAFT; R2-1708574, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Berlin, Germany; 20170821 - 20170825 20 August 2017 (2017-08-20), XP051318424, Retrieved from the Internet: URL:http://www.3gpp.org/ftp/Meetings_3GPP_ SYNC/RAN2/Docs/ [retrieved on 2017-08-20]
- QUALCOMM INCORPORATED: "Introduction of NR indication", 3GPP DRAFT; 36331_CRXXXX_(REL-15)_R2-1713639 INTRODUCTION OF NR INDICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CED , vol. RAN WG2, no. Reno, USA; 20171127 - 20171201 17 November 2017 (2017-11-17), XP051371311, Retrieved from the Internet: URL:http://www.3gpp.org/ftp/tsg%5Fran/WG2% 5FRL2/TSGR2%5F100/Docs/ [retrieved on 2017-11-17]
- CATT: "Clarification of the UpperLayerIndication in SIB2 (RILNo C008)", 3GPP DRAFT; R2-1801529 CLARIFICATION OF THE UPPERLAYERINDICATION IN SIB2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG2, no. Vancouver, Canada; 20180122 - 20180126 18 January 2018 (2018-01-18), XP051386984, Retrieved from the Internet: URL:http://www.3gpp.org/ftp/tsg%5Fran/WG2% 5FRL2/TSGR2%5FAHs/2018%5F01%5FNR/Docs/ [retrieved on 2018-01-18]
- SAMSUNG: "PLMN-specific EAB", 3GPP DRAFT; R2-115037, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Zhuhai; 20111010, 30 September 2011 (2011-09-30), XP050540573, [retrieved on 2011-09-30]
- QUALCOMM INCORPORATED: "Preventing Legacy LTE UEs from camping on eLTE Cells & PLMNs connected to New 5G Core Network only", 3GPP DRAFT; R2-1712264_PREVENTING LEGACY LTE UES FROM CAMPING ON ELTE CELLS & PLMNS CONNECTED TO NEW 5G CORE, 3RD GENERATION PARTNERSHIP PROJECT (3GPP), MOBILE COMPETENCE CENTRE ; 650, ROUTE DES LUCIO , vol. RAN WG2, no. Reno, USA; 20171127 - 20171201 16 November 2017 (2017-11-16), XP051370939, Retrieved from the Internet: URL:http://www.3gpp.org/ftp/tsg%5Fran/WG2% 5FRL2/TSGR2%5F100/Docs [retrieved on 2017-11-16]
- RAN2 CHAIRMAN (INTEL): "Chairman notes", 3GPP DRAFT; RAN2-100-RENO-CHAIR-NOTES-2017-12-01-EOM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20171127 - 20171201 2 December 2017 (2017-12-02), XP051372942, Retrieved from the Internet: URL:http://www.3gpp.org/ftp/tsg%5Fran/WG2% 5FRL2/TSGR2%5F100/Report/ [retrieved on 2017-12-02]
- NOKIA ET AL: "(TP for NR BL CR for TS 38.423): [SON/ANR] Unified capability signalling for 5G cells", 3GPP DRAFT; R3-183761 UNIFORM CELL CAPA SIG, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Montreal, Canada; 20180702 - 20180706 1 July 2018 (2018-07-01), XP051468046, Retrieved from the Internet: URL:http://www.3gpp.org/ftp/Meetings%5F3GP P%5FSYNC/RAN3/Docs [retrieved on 2018-07-01]

## Description

### CROSS-REFERENCE TO RELATED APPLICATIONS

This application claims priority to priority to U.S. Provisional Patent Application, Serial No. 62/592,694, filed on November 30, 2017.

### TECHNICAL FIELD

The present disclosure generally relates to the technical field of communication, and in particular relates to methods and a user equipment for system information. The features of the preamble of the independent claims are known from "AS support for 5G indication, 3GPP DRAFT; R2-1708228, 2017-08-20, XP051318130", "Introducing 5G indication in LTE RRC SIB, 3GPP DRAFT; R2-1710512, 2017-10-08, XP051342555", "5G indicator for EN-DC, 3GPP DRAFT; R2-1713443, 2017-11-17, XP051372166", "5G Availability Indicator, 3GPP DRAFT; R2-1708574, 2017-08-20, XP051318424", "Introduction of NR indication, 3GPP DRAFT; R2-1713639, 2017-11-17, XP051371311", "Clarification of the Upperlayerlndication in SIB2 (RILNo C008), 3GPP DRAFT; R2-1801529, 2018-01-18, XP051386984", "PLMN-specific EAB, 3GPP DRAFT; R2-115037, 2011-09-30, XP050540573", "Preventing Legacy LTE UEs from camping on eLTE Cells & PLMNs connected to New 5G Core Network only, 3GPP DRAFT; R2-1712264, 2017-11-16, XP051370939", US 2014335882A1, CN 105009678A, "Chairman notes, 3GPP DRAFT; RAN2-100-RENO-CHAIR-NOTES-2017-12-01-EOM, 3RD GENERATION PARTNERSHIP PROJECT (3GPP), 2017-12-02, XP051372942" and "(TP for NR BL CR for TS 38.423): [SON/ANR] Unified capability signalling for 5G cells, 3GPP DRAFT; R3-183761, 2018-07-01, XP051468046".

### BACKGROUND

Since there is a limited bandwidth and coverage of a single base station, it is easier to meet the capacity and coverage requirements of users when multiple cells or wireless resources of the base station are centralized for users' services. For example, dual connectivity is in a form for centralizing the wireless resources.

In existing technology for dual connectivity, user equipments (UEs) cannot know whether one cell supports dual connectivity. Therefore, it is desirable for UEs to know whether cells support dual connectivity or not, in order to access.

### SUMMARY OF THE DISCLOSURE

It is an object of the invention to provide a method for system information as defined by independent claim 1.

According to another aspect of the present disclosure, a method for system information as defined by independent claim 4 is provided.

According to yet another aspect of the present disclosure, a user equipment as defined by independent claim 9 is provided.

According to yet another aspect of the present disclosure, a computer readable medium as defined by independent claim 10 is provided.

### BRIEF DESCRIPTION OF THE DRAWINGS

In order to make the technical solution described in the embodiments of the present disclosure more clearly, the drawings used for the description of the embodiments will be briefly described. Apparently, the drawings described below are only for illustration but not for limitation. It should be understood that, one skilled in the art may acquire other drawings based on these drawings, without making any inventive work.
FIG. 1 is a flow chart of a method for system information according to an embodiment of the present disclosure.
FIG. 2 is an example of the dual connectivity (DC) indicator according to an embodiment of the present disclosure.
FIG. 3 is another example of the dual connectivity (DC) indicator according to an embodiment of the present disclosure.
FIG. 4 is yet another example of the dual connectivity (DC) indicator according to an example useful for understanding the invention but not covered by the claims.
FIG. 5 is a flow chart of a method for system information according to another example useful for understanding the invention but not covered by the claims.
FIG. 6 is a flow chart of a method for system information according to yet another embodiment of the present disclosure.
FIG. 7 is a structural schematic view of an apparatus for system information according to an example useful for understanding the invention but not covered by the claims.
FIG. 8 is a structural schematic view of an apparatus for system information according to another embodiment of the present disclosure.
FIG. 9 is a structural schematic view of an apparatus for system information according to yet another example useful for understanding the invention but not covered by the claims.
FIG. 10 is a structural schematic view of an apparatus for system information according to yet another embodiment of the present disclosure.

### DETAILED DESCRIPTION

Below embodiments of the disclosure will be described in detail, examples of which are shown in the accompanying drawings, in which the same or similar reference numerals have been used throughout to denote the same or similar elements or elements serving the same or similar functions. The embodiments described below with reference to the accompanying drawings are exemplary only, meaning they are intended to be illustrative of rather than limiting the disclosure.

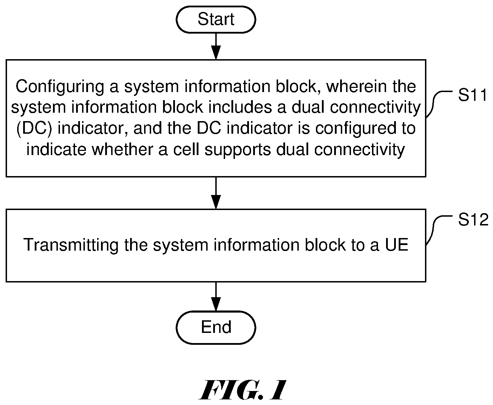

Referring to FIG. 1, FIG. 1 is a flow chart of a method for system information according to an embodiment of the present disclosure. In this embodiment, the method is performed at a base station side. The base station may be connected to a core network, and has a wireless communication with a user equipment, providing communication coverage for a corresponding region. The base station may be a macro base station, a micro base station, a pico base station or femtocell. In some embodiments, the base station may be called as the wireless base station, access point, B node, evolved B node (eNodeB, eNB), ng-eNB, gNB, en-gNB or other suitable terms. As shown in FIG. 1, the method may include the following blocks.

At block S11, a system information block is configured. The system information block includes a dual connectivity (DC) indicator, and the DC indicator is configured to indicate whether a cell supports dual connectivity.

As is known, System information (SI) is cell-specific, which is valid for all UEs accessing the cell. The SI is used to inform the UEs how the cell is configured, such that the UEs can operate within the cell.

The SI may be divided into a master information block (MIB) and a plurality system information blocks (SIBs). The MIB contains cell barred status information and essential physical layer information of the cell required to receive further system information. There are various types of SIBs, such SIB1, SIB2, SIB3, etc. SIB1 is a SIB with type1. The SIB1 is the most important one among the plurality of SIBs, because the SIB1 defines the scheduling of other types of SIBs. Other types of SIBs may be obtained for the UEs after the SIB1 has been decoded successfully. The system information block with the DC indicator may include the SIB1 in one example. The system information block with the DC indicator may include one of other SIBs except for the SIB1 in another example. Since a size of the SIB1 is constraint, the system information block with the DC indicator may exclude the SIB1 to avoid impacting the SIB1.

The DC indicator is configured to indicate whether the cell supports the dual connectivity. In other words, the DC indicator is configured to indicate the capability of the cell on the dual connectivity. A UE in a dual-connectivity state is connected to both a master node and a secondary node. Cells belonging to the master node and serving the UE is referred as master cell group (MCG), and cells belonging to the secondary node and serving the UE is referred as Secondary Cell Group (SCG).

The dual connectivity may be used in a heterogeneous network, where the master node and secondary node are different types of radio access network (RAN) nodes to achieve different types of radio access networks. For example, the master node is a RAN node for New Radio access technology (NR), and the secondary node is a RAN node for Long Term Evolution (LTE). In this case, it is interoperable and collaborated between the NR and LTE.

The dual connectivity has a plurality of types of dual connectivity. In one example, the master node for dual connectivity is an eNB, and the secondary node for dual connectivity is an en-gNB. The eNB is a node providing Evolved Universal Terrestrial Radio Access (E-UTRA) user plane and control plane protocol terminations towards the UE. The en-gNB is a node providing NR user plane and control plane protocol terminations towards the UE. The eNB is connected to the Evolved Packet Core (EPC) via the S 1 interface and to the en-gNB via the X2 interface. The en-gNB may also be connected to the EPC via the S1-U interface. The E-UTRA is a radio technology for LTE. In this case, the dual connectivity may be referred as E-UTRA-NR Dual Connectivity (EN-DC) or LTE-NR Dual Connectivity. In other word, the type of the dual connectivity may be referred as the EN-DC or LTE-NR Dual Connectivity.

In another example, the master node for the dual connectivity is a gNB, and the secondary node for the dual connectivity is a ng-eNB. The gNB is a node providing NR user plane and control plane protocol terminations towards the UE. The ng-eNB is a node providing E-UTRA user plane and control plane protocol terminations towards the UE. The gNB and ng-eNB are interconnected with each other via Xn interface. The gNB and ng-eNB are also connected to the 5G Core Network (5GC) via NG interfaces. In this case, the dual connectivity may be referred as NR-E-UTRA Dual Connectivity (NE-DC). In other word, the type of the dual connectivity may be referred as the NE-DC.

In yet another example, the master node for dual connectivity is a ng-eNB, and the secondary node for dual connectivity is a gNB. In this case, the dual connectivity may be referred as NG-RAN E-UTRA-NR Dual Connectivity (NGEN-DC). In other word, the type of the dual connectivity may be referred as NGEN-DC.

In addition, the dual connectivity may be used in a homogeneous network, where types of the primary and secondary nodes are same. For example, both the master and secondary nodes are eNBs, or both the master and secondary nodes are gNBs.

In the present invention, a plurality of DC indicators is configured if the cell supports more than one type of the dual connectivity. Each DC indicator is configured to indicate the capability on one type of dual connectivity. In this case, the plurality of DC indicators may be configured in a same SIB in one example, and the plurality of DC indicators may be configured in different SIBs in another example. For example, when the cell supports the EN-DC and the NGEN-DC, two DC indicators may be configured in the SIB2. As another example, when the cell supports the EN-DC and the NGEN-DC, two DC indicators may be configured, one being configured in the SIB2 and the other being configured in the SIB3.

In another example useful for understanding the invention but not covered by the claims, one DC indicator may only be configured if the cell supports more than one type of dual connectivity. For example, one DC indicator may only be configured to indicate that the cell supports both the EN-DC and the NGEN-DC.

Alternatively, for the dual connectivity indicated by the DC indicator, the cell acts as the SpCell of the master cell group (Pcell), such that the capacity of the SIBs is reduced. For example, the dual connectivity indicated by the DC indicator may be the EN-DC rather than the NE-DC if the cell is a LTE cell.

At block S12, the system information block is transmitted to a UE.

In one example, when the system information block with the DC indicator is the SIB1, and then the system information block with the DC indicator is broadcast on the DL-SCH periodically. In another example, when the system information block with the DC indicator is one except for the SIB1, such as SIB2, and then the system information block with the DC indicator is carried in a Systemlnformation (SI) message which is transmitted on the DL-SCH. The SI message can be broadcast periodically or be provided on-demand. The SIB1 includes scheduling information of other SIBs and/or information for the UE to perform SI request.

With the DC indicator in the system information block, the UE can know that the capability of the cell on the dual connectivity, so as to perform subsequent operations associated with the dual connectivity and / or make decisions associated with the dual connectivity. After receiving the system information block with the DC indicator, the UE can obtain the DC indicator based on the system information block with the DC indicator. For example, the UE parses the system information block with the DC indicator to obtain the DC indicator. In the case that the DC indicator indicates that the cell using one radio access network technology supports the dual connectivity for the heterogeneous network, the UE can measure another cell for another radio access network technology to obtain a measurement report, and then report the measurement report to the base station to configure the dual connectivity for the heterogeneous network for the UE. For example, in a heterogeneous network, the DC indicator indicates that one LTE cell supports the EN-DC, and the UE measures one NR cell to obtain a measurement report.

In the present invention, the cell may further be shared with a plurality of Public Land Mobile Networks (PLMNs). Different PLMNs may have different capabilities on the dual connectivity. That is, different PLMNs may have different supports for the dual connectivity. The DC indicator is configured to indicate whether the PLMNs support the dual connectivity. The PLMNs associated with the DC indicator may be some of the PLMNs sharing the cell or all the PLMNs sharing the cell.

In the present invention, the DC indicator is in a bitmap format to save the capacity of SIBs. The DC indicator in the bitmap format includes at least one set of bits, and each set is mapped to one PLMN. Each set of bits includes at least one bit. In one example useful for understanding the invention but not covered by the claims, the number of bits in one set is equal to the number of types of dual connectivity indicated by the DC indicator.

A value of each set is configured to indicate whether the corresponding PLMN supports the dual connectivity. Specifically, a value of each bit in one set is used to indicate whether the corresponding PLMN supports a corresponding type of dual connectivity. For example, a value of one bit is 1, indicating that the corresponding PLMN support the corresponding type of dual connectivity, and the value of one bit is 0, indicating that the corresponding PLMN doesn't support the corresponding type of the dual connectivity. As another example, a value of one bit is 0, indicating that the corresponding PLMN support the corresponding type of dual connectivity, and the value of one bit is 1, indicating that the corresponding PLMN doesn't support the corresponding type of dual connectivity.

In one example useful for understanding the invention but not covered by the claims, the number of the sets of bits is same as the number of the PLMNs, and the sets of bits are mapped to the PLMNs in a first order, wherein the first order corresponds to a second order in which the PLMNs are arranged in an information element PLMN-IdentityList. For example, the sets of bits are mapped to the PLMNs in an order in which the PLMNs are arranged in an information element PLMN-IdentityList. For another example, the sets of bits are mapped to the PLMNs in the first order matching the second order in which the PLMNs are arranged in an information element PLMN-IdentityList. Thus, indication for an order in which the sets of bits are arranged in the DC indicator can be omitted.

Assume that there are four PLMNs, 1-4, with which the cell is shared, and the cell support three types of dual connectivity, X-Y, the bitmap format for the DC indicator may have various implementations. The various implementations will be described in the following with reference to the drawing.

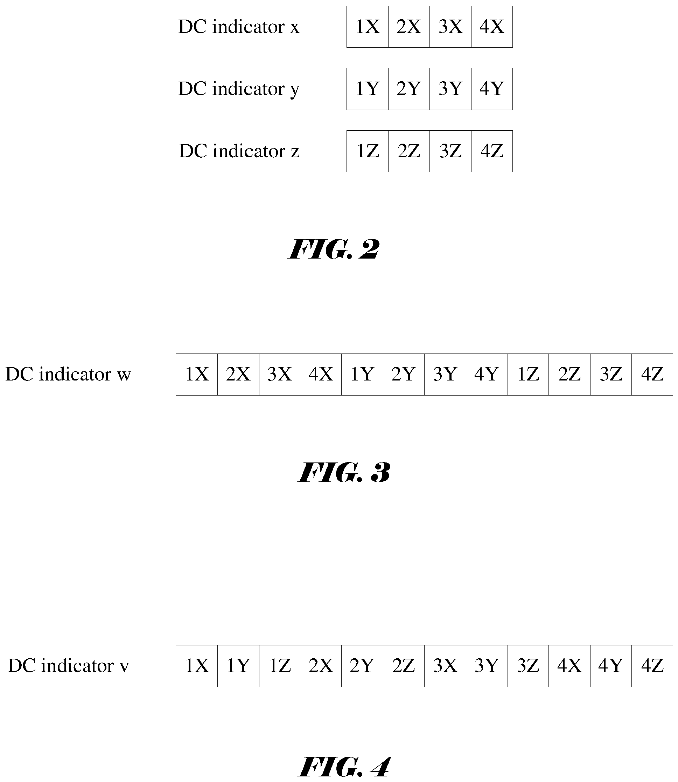

In the implementation according to the invention, the three types of dual connectivity are assigned a single DC indicator, respectively. Therefore, three DC indicators x-z are configured. As shown in FIG. 2, each box represents one bit. The DC indicator x is used to indicate whether the PLMNs support the type X. The first bit in the DC indicator x corresponds to 1X, a value of which is used to indicate whether the PLMN 1 supports the type X; the second bit in the DC indicator x corresponds to 2X, a value of which is used to indicate whether the PLMN 2 supports the type X; the third bit in the DC indicator x corresponds to 3X, a value of which is used to indicate whether the PLMN 3 supports the type X; and the fourth bit in the DC indicator x corresponds to 4X, a value of which is used to indicate whether the PLMN 4 supports the type X. The DC indicator y is used to indicate whether the PLMNs support the type Y. The first bit in the DC indicator y corresponds to 1Y, a value of which is used to indicate whether the PLMN 1 supports the type Y; the second bit in the DC indicator y corresponds to 2Y, a value of which is used to indicate whether the PLMN 2 supports the type Y; the third bit in the DC indicator y corresponds to 3Y, a value of which is used to indicate whether the PLMN 3 supports the type Y; and the fourth bit in the DC indicator y corresponds to 4Y, a value of which is used to indicate whether the PLMN 4 supports the type Y. The DC indicator z is used to indicate whether the PLMNs support the type Z. The first bit in the DC indicator z corresponds to 1Z, a value of which is used to indicate whether the PLMN 1 supports the type Z; the second bit in the DC indicator z corresponds to 2Z, a value of which is used to indicate whether the PLMN 2 supports the type Z; the third bit in the DC indicator z corresponds to 3Z, a value of which is used to indicate whether the PLMN 3 supports the type Z; and the fourth bit in the DC indicator z corresponds to 4Z, a value of which is used to indicate whether the PLMN 4 supports the type Z. In this implementation, each DC indicator has four set of bits, and each set includes one bit.

In another exemplary implementation not covered by the claims, a DC indicator w is configured to indicate whether the PLMNs support all the types of dual connectivity. As shown in FIG. 3, the DC indicator w has 12 bits, which is formed when the DC indicators x-z as described in the previous implementation are sequentially stitched together. Various bits in this implementation are defined in a way in which bits in the previous implementation are defined.

In yet another exemplary implementation not covered by the claims, a DC indicator v is configured to indicate whether the PLMNs support all the types of dual connectivity. As shown in FIG. 4, the DC indicator v has 12 bits, which correspond to 1X, 1Y, 1Z, 2X, 2Y, 2Z, 3X, 3Y, 3Z, 4X, 4Y and 4Z, respectively. Each box represents one bit. The bits in the DC indicator v, which is configured to indicate whether a same PLMN supports different types of dual connectivity, belong to one set of bits.

In another example useful for understanding the invention but not covered by the claims, the DC indicator may be enumerated. The enumerated DC indicator may include at least one flags. Each flag is mapped to one PLMN and each flag is configured to directly indicate whether the corresponding PLMN supports the dual connectivity. For example, the flag "supported" may be used to represent that the PLMN supports the dual connectivity, and the flag "notSupported" may be used to represent that the PLMN doesn't support the dual connectivity. Multiple flags are configured for one PLMN to directly indicate whether the corresponding PLMN supports the respective type of dual connectivity if there is more than one types of dual connectivity allowed by the cell. The PLMNs associated with the DC indicator may be some of the PLMNs sharing the cell or all the PLMNs sharing the cell.

In one embodiment, the system information block may further include an information element PLMN-IdentityList. The information element PLMN-IdentityList includes a plurality of PLMN-IdentityInfo, each PLMN-IdentityInfo is mapped to one PLMN. The information element PLMN-IdentityList is shown as follows.

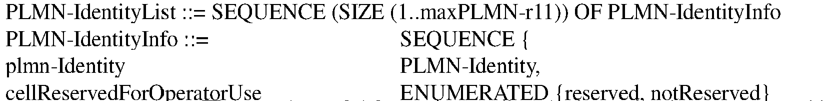

In one example useful for understanding the invention but not covered by the claims, as information of the capability on the dual connectivity is PLMN-specific, the flags of corresponding PLMNs may be added to the corresponding PLMN-IdentityInfo of the PLMNs.

In another example useful for understanding the invention but not covered by the claims, the DC indicator may be independent from the PLMN-IdentityInfo. In this case, each flag may include an Identity of the corresponding PLMN. When each PLMN is mapped to a same number of flags, the flags of the corresponding PLMN are arranged continuously. The flags of different PLMNs are arranged in the DC indicator in an order in which the PLMNs are arranged in an information element PLMN-IdentityList.

In addition, when multiple PLMNs with which the cell is shared have the same capability on the dual connectivity, the DC indicator may only include, according to the invention, one set of bits or, according to an example not covered by the claims, one flag for those PLMNs without distinguishing those PLMNs. In other words, for any PLMNs, the DC indicator only include, according to the invention, one set or, according to an example not covered by the claims, one flag. This is similar to that of the case where one PLMN is only associated with the cell. In the case where different PLMNs are not distinguished or only one PLMN is associated with the cell, the DC indicator in the bitmap format (according to the invention) and the enumerated DC indicator (in an example not covered by the claims) are also configured.

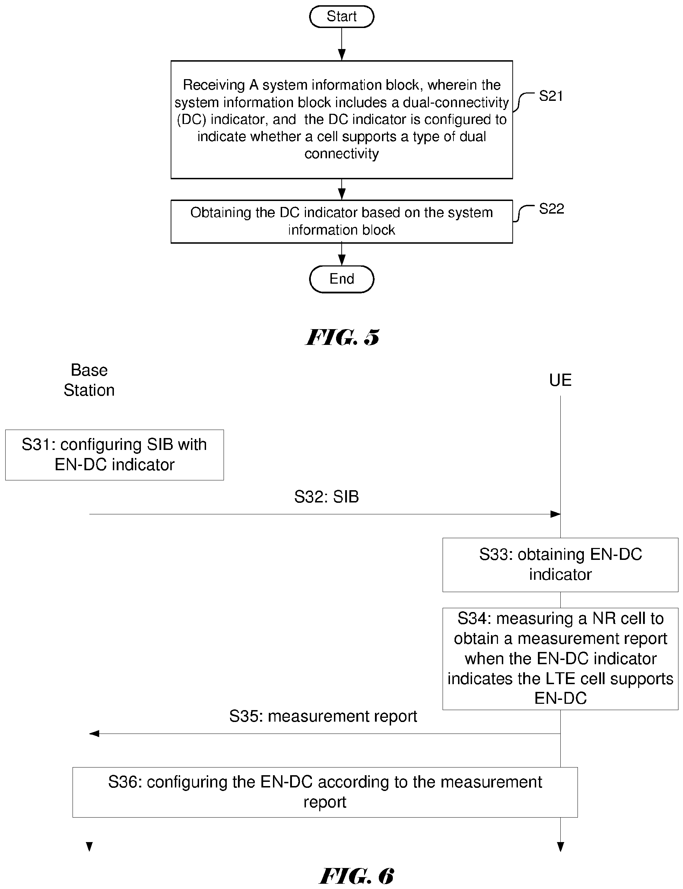

Referring to FIG. 5, FIG. 5 is a flow chart of a method for system information according to another embodiment of the present disclosure. In this embodiment, the method is performed at a UE side. The UE may be fixed in one example, and may be mobile in another example, such as a cellular phone, a personal digital assistant (PDA), a wireless modem, a tablet PC, a laptop, a cordless phone, etc. As shown in FIG. 5, the method may include the following blocks.

At block S21, a system information block is received. The system information block includes a dual-connectivity (DC) indicator. The DC indicator is configured to indicate whether a cell supports dual connectivity.

At block S22, the DC indicator is obtained based on the system information block.

In this embodiment, the DC indicator is the DC indicator as described in previous embodiments and a combination thereof, which will not be described herein. In one example, the system information block is parsed by the UE, and then the DC indicator is obtained.

An example of a transmission process for system information block is illustrated in the following with reference to FIG. 6, wherein a portion which is same as that in the previous embodiment is omitted to be described. As shown in FIG. 6, the method for system information may include the following blocks.

At block S31, system information block is configured by a base station. The system information block may include a dual connectivity (DC) indicator.

The DC indicator is configured to indicate whether a cell supports dual connectivity. It is noted that the cell is a LTE cell, and the dual connectivity is only the EN-DC in this embodiment. The DC indicator in this case is referred as the EN-DC indicator.

At block S32, the base station transmits the system information block to a UE.

At block S33, the UE obtains the DC indicator based on the system information block.

At block S34, the UE measures one NR cell to obtain a measurement report when the obtained DC indicator indicates that the LTE cell supports the EN-DC.

At block S35, the UE reports the measurement report.

At block S36, the base station configures the dual connectivity for the UE according to the measurement report.

Specifically, the base station selects one suitable NR cell according to the measurement report, and then performs a Secondary Node Addition procedure to configure the base station corresponding to the suitable NR cell for the UE.

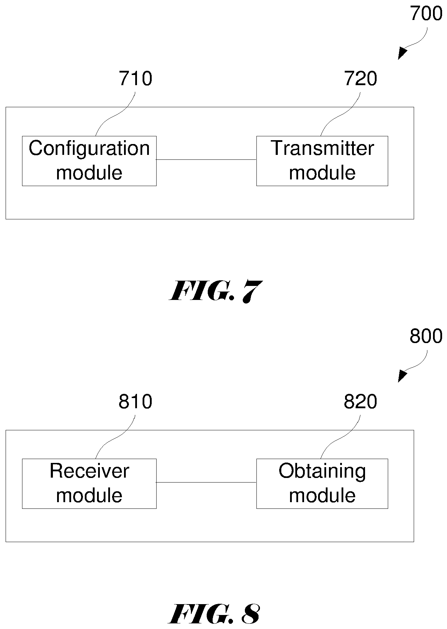

Referring to FIG. 7, FIG. 7 is a structural schematic view of an apparatus for system information according to an example useful for understanding the invention but not covered by the claims. The apparatus 700 may include a configuration module 710 and a transmitter module 720.

The configuration module 710 may be used to configure a system information block. The system information block may include a dual-connectivity (DC) indicator, and the DC indicator is configured to indicate whether a cell supports dual connectivity. The transmitter module 720 may be used to transmit the system information block to a user equipment.

It should be noted that, the above descriptions for the methods in the above embodiments, are also appropriate for the apparatus of the exemplary embodiment of the present disclosure, which will be not described herein.

Referring to FIG. 8, FIG. 8 is a structural schematic view of an apparatus for system information according to another embodiment of the present disclosure. The apparatus 800 may include a receiver module 810 and an obtaining module 820.

The receiver module 810 may be used to receive a system information block, wherein the system information block comprises a dual-connectivity (DC) indicator, and wherein the DC indicator is configured to indicate whether a cell supports dual connectivity. The obtaining module 820 may be used to obtain the DC indicator based on the system information block.

It should be noted that, the above descriptions for the methods for system information in the above embodiments, are also appropriate for the apparatus of the exemplary embodiment of the present disclosure, which will be not described herein.

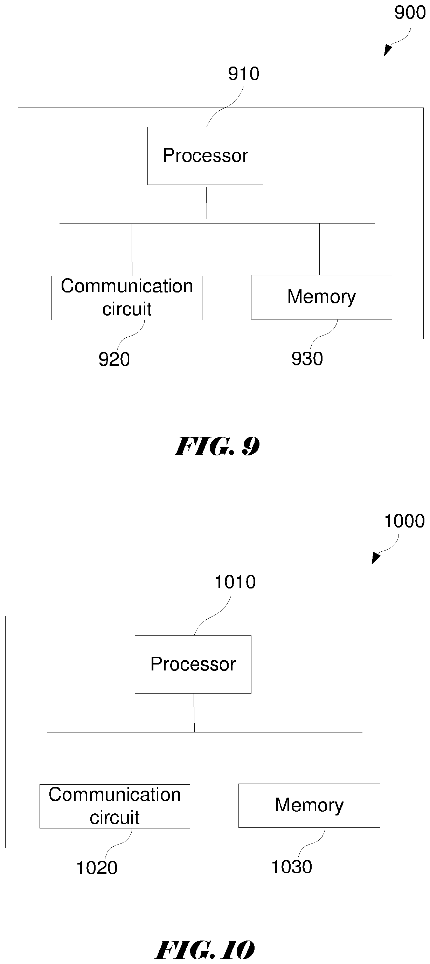

Referring to FIG. 9, FIG. 9 is a structural schematic view of an apparatus for system information according to yet another example useful for understanding the invention but not covered by the claims. The apparatus 900 may include a processor 910, a communication circuit 920 and a memory 930, which are coupled together.

The communication circuit 920 may be configured to transmit and receive data, which is an interface for communication between the apparatus 900 and other communication devices.

The memory 930 is configured to store executable program instructions. The processor 910 may be configured to read the executable program instructions stored in the memory 930 to implement a procedure corresponding to the executable program instructions, so as to perform any methods for system information as described in the previous embodiments or a method provided with arbitrary and non-conflicting combination of the previous embodiments.

The apparatus 900 may be a base station in one example. The apparatus 900 may be a separate component integrated in a base station, such as a base band board, in another example.

Referring to FIG. 10, FIG. 10 is a structural schematic view of an apparatus for system information according to yet another embodiment of the present disclosure. The apparatus 1000 may include a processor 1010, a communication circuit 1020 and a memory 1030, which are coupled together.

The communication circuit 1020 may be configured to transmit and receive data, which is an interface for communication between the apparatus 1000 and other communication devices.

The memory 1030 is configured to store executable program instructions. The processor 1010 may be configured to read the executable program instructions stored in the memory 1030 to implement a procedure corresponding to the executable program instructions, so as to perform any methods for system information as described in the previous embodiments or a method provided with arbitrary and non-conflicting combination of the previous embodiments.

The apparatus 1000 may be a UE in one example. The apparatus 1000 may be a separate component integrated in a UE, such as a base band chip, in another example.

A person of ordinary skill in the art may appreciate that, in combination with the examples described in the embodiments disclosed in this specification, units and algorithm steps may be implemented by electronic hardware, computer software, or a combination thereof. In order to clearly describe the interchangeability between the hardware and the software, the foregoing has generally described compositions and steps of every embodiment according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present application.

It can be clearly understood by a person skilled in the art that, for the purpose of convenient and brief description, for a detailed working process of the foregoing system, apparatus and unit, reference may be made to the corresponding process in the method embodiments, and the details will not be described herein again.

In the several embodiments provided in the present application, it should be understood that the disclosed methods and apparatus may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units herein may be selected according to the actual needs to achieve the objectives of the solutions of the embodiments of the present application.

In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit are implemented in a form of a software functional unit and sold or used as an independent product, the integrated unit may be stored in a computer- readable storage medium. Based on such an understanding, the technical solutions of the present application essentially, or the part contributing to the prior art, or all or a part of the technical solutions may be implemented in a form of software product. The computer software product is stored in a storage medium, and includes several instructions for instructing a computer device (which may be a personal computer, a server, or a network device) to perform all or a part of the steps of the methods described in the embodiments of the present application. The foregoing storage medium includes: any medium that can store program codes, such as a USB flash disk, a removable hard disk, a read-only memory (ROM, Read-Only Memory), a random access memory (RAM, Random Access Memory), a magnetic disk, or an optical disk.

The foregoing descriptions are merely specific embodiments of the present application, but are not intended to limit the protection scope of the present application. Therefore, the protection scope of the present application shall be subject to the protection scope of the claims.

## Claims

1. A method for system information, comprising:
configuring (S11) a system information block, wherein the system information block comprises a dual-connectivity, DC, indicator, and wherein the dual connectivity comprises a plurality of types of dual connectivity, the DC indicator is configured to indicate whether a cell supports dual connectivity and further configured to indicate whether a plurality of Public Land Mobile Networks, PLMNs, support the dual connectivity, and the cell is shared with the plurality of PLMNs; and
transmitting (S12) the system information block to a user equipment, UE;
**characterized in that** the method further comprises:
when the DC indicator indicates that a cell using one radio access network technology supports dual connectivity for a heterogeneous network, configuring the dual connectivity for the heterogeneous network for the UE based on a measurement report on another cell for another radio access network technology sent by the UE;
wherein each type of dual connectivity is assigned a single DC indicator, each DC indicator comprises at least one set of bits, a number of the at least one set of bits is equal to a number of the PLMNs, each set of bits comprises one bit, and a value of each bit is configured to indicate whether the corresponding PLMN supports a corresponding type of dual connectivity.

2. The method of claim 1, wherein the at least one set of bits are mapped to the PLMNs in a first order, wherein the first order corresponds to a second order in which the PLMNs are arranged in an information element PLMN-IdentityList.

3. The method of claim 1, wherein the system information comprises type1 of system information block and other types of system information blocks, and the DC indicator is configured in the system information block with a type except for type1.

4. A method for system information, comprising:
receiving (S21) a system information block, wherein the system information block comprises a dual-connectivity, DC, indicator, and wherein the dual connectivity comprises a plurality of types of dual connectivity, the DC indicator is configured to indicate whether a cell supports dual connectivity and further configured to indicate whether a plurality of Public Land Mobile Networks, PLMNs, support the dual connectivity, and the cell is shared with the plurality of PLMNs; and
obtaining (S22) the DC indicator based on the system information block;
**characterized in that** the method further comprises:
when the DC indicator indicates that a cell using one radio access network technology supports dual connectivity for a heterogeneous network, measuring another cell for another radio access network technology to obtain a measurement report, and reporting the measurement report to a base station to configure the dual connectivity for the heterogeneous network;
wherein each type of dual connectivity is assigned a single DC indicator, each DC indicator comprises at least one set of bits, a number of the at least one set of bits is equal to a number of the PLMNs, each set of bits comprises one bit, and a value of each bit is configured to indicate whether the corresponding PLMN supports a corresponding type of dual connectivity.

5. The method of claim 4, wherein the at least one set of bits are mapped to the PLMNs in a first order, wherein the first order corresponds to a second order in which the PLMNs are arranged in an information element PLMN-IdentityList.

6. The method of claim 4, wherein the system information comprises type1 of system information block and other types of system information blocks, and the DC indicator is configured in the system information block with a type except for type1.

7. The method of claim 4, wherein one of the plurality of types of dual connectivity is E-UTRA-NR Dual Connectivity, EN-DC.

8. The method of claim 7, wherein the cell is a NR cell; and the method further comprises:
measuring the NR cell to obtain a measurement report when the obtained DC indicator indicates the NR cell supports the EN-DC.

9. A user equipment, comprising a processor in communication with a memory, the processor being configured to execute instructions stored in the memory that cause the processor to perform the method for system information of any one of claims 4-8.

10. A computer readable medium storing instructions which, when executed by a processor, cause the processor to perform the method for system information of any one of claims 4-8.

## Patentansprüche

1. Verfahren für Systeminformationen, umfassend:
Konfigurieren (S11) eines Systeminformationsblocks, wobei der Systeminformationsblock einen Dualkonnektivitäts-, DC-, Indikator umfasst und wobei die Dualkonnektivität eine Vielzahl von Arten von Dualkonnektivität umfasst, wobei der DC-Indikator dazu ausgelegt ist, anzugeben, ob eine Zelle Dualkonnektivität unterstützt, und ferner dazu ausgelegt ist, anzugeben, ob eine Vielzahl von öffentlichen terrestrischen Mobilfunknetzen, PLMNs, die Dualkonnektivität unterstützen und die Zelle mit der Vielzahl von PLMNs gemeinsam genutzt wird; und
Übertragen (S12) des Systeminformationsblocks an ein Benutzergerät, UE;
**dadurch gekennzeichnet, dass** das Verfahren ferner umfasst:
wenn der DC-Indikator angibt, dass eine Zelle, die eine Funkzugangsnetzwerktechnologie verwendet, Dualkonnektivität für ein heterogenes Netzwerk unterstützt, Konfigurieren der Dualkonnektivität für das heterogene Netzwerk für das UE basierend auf einem durch das UE gesendeten Messbericht über eine andere Zelle für eine andere Funkzugangsnetzwerktechnologie;
wobei jeder Art von Dualkonnektivität ein einzelner DC-Indikator zugewiesen wird, jeder DC-Indikator mindestens einen Satz von Bits umfasst, eine Anzahl des mindestens einen Satzes von Bits gleich einer Anzahl der PLMNs ist, jeder Satz von Bits ein Bit umfasst und ein Wert jedes Bits dazu ausgelegt ist, anzugeben, ob das entsprechende PLMN eine entsprechende Art von Dualkonnektivität unterstützt.

2. Verfahren gemäß Anspruch 1, wobei der mindestens eine Satz von Bits auf die PLMNs in einer ersten Reihenfolge abgebildet wird, wobei die erste Reihenfolge einer zweiten Reihenfolge entspricht, in der die PLMNs in einer Informationselement-PLMN-Identitätsliste angeordnet sind.

3. Verfahren gemäß Anspruch 1, wobei die Systeminformationen Typl des Systeminformationsblocks und andere Arten von Systeminformationsblöcken umfassen, und der DC-Indikator im Systeminformationsblock mit einer Art außer Typl konfiguriert ist.

4. Verfahren für Systeminformationen, umfassend:
Empfangen (S21) eines Systeminformationsblocks, wobei der Systeminformationsblock einen Dualkonnektivitäts-, DC-, Indikator umfasst und wobei die Dualkonnektivität eine Vielzahl von Arten von Dualkonnektivität umfasst, wobei der DC-Indikator dazu ausgelegt ist, anzugeben, ob eine Zelle Dualkonnektivität unterstützt, und ferner dazu ausgelegt ist, anzugeben, ob eine Vielzahl von öffentlichen terrestrischen Mobilfunknetzen, PLMNs, die Dualkonnektivität unterstützen und die Zelle mit der Vielzahl von PLMNs gemeinsam genutzt wird; und
Erhalten (522) des DC-Indikators basierend auf dem Systeminformationsblock;
**dadurch gekennzeichnet, dass** das Verfahren ferner umfasst:
wenn der DC-Indikator angibt, dass eine Zelle, die eine Funkzugangsnetzwerktechnologie verwendet, Dualkonnektivität für ein heterogenes Netzwerk unterstützt, Messen einer anderen Zelle für eine andere Funkzugangsnetzwerktechnologie, um einen Messbericht zu erhalten, und Melden des Messberichts an eine Basisstation, um die Dualkonnektivität für das heterogene Netzwerk zu konfigurieren;
wobei jeder Art von Dualkonnektivität ein einzelner DC-Indikator zugewiesen wird, jeder DC-Indikator mindestens einen Satz von Bits umfasst, eine Anzahl des mindestens einen Satzes von Bits gleich einer Anzahl der PLMNs ist, jeder Satz von Bits ein Bit umfasst und ein Wert jedes Bits dazu ausgelegt ist, anzugeben, ob das entsprechende PLMN eine entsprechende Art von Dualkonnektivität unterstützt.

5. Verfahren gemäß Anspruch 4, wobei der mindestens eine Satz von Bits auf die PLMNs in einer ersten Reihenfolge abgebildet wird, wobei die erste Reihenfolge einer zweiten Reihenfolge entspricht, in der die PLMNs in einer Informationselement-PLMN-Identitätsliste angeordnet sind.

6. Verfahren gemäß Anspruch 4, wobei die Systeminformationen Typl des Systeminformationsblocks und andere Arten von Systeminformationsblöcken umfassen, und der DC-Indikator im Systeminformationsblock mit einer Art außer Typl konfiguriert ist.

7. Verfahren gemäß Anspruch 4, wobei eine der Vielzahl von Arten von Dualkonnektivität E-UTRA-NR Dualkonnektivität, EN-DC, ist.

8. Verfahren gemäß Anspruch 7, wobei die Zelle eine NR-Zelle ist; und das Verfahren ferner umfasst:
Messen der NR-Zelle, um einen Messbericht zu erhalten, wenn der erhaltene DC-Indikator angibt, dass die NR-Zelle die EN-DC unterstützt.

9. Benutzergerät, umfassend einen Prozessor in Kommunikation mit einem Speicher, wobei der Prozessor dazu ausgelegt ist, im Speicher gespeicherte Befehle auszuführen, die den Prozessor veranlassen, das Verfahren für Systeminformationen gemäß einem der Ansprüche 4-8 durchzuführen.

10. Computerlesbares Medium, das Befehle speichert, die beim Ausführen durch einen Prozessor den Prozessor veranlassen, das Verfahren für Systeminformationen gemäß einem der Ansprüche 4-8 durchzuführen.

## Revendications

1. Procédé d'information système, comprenant :
la configuration (S11) d'un bloc d'informations système, dans lequel le bloc d'informations système comprend un indicateur de double connectivité, DC, et dans lequel la double connectivité comprend une pluralité de types de double connectivité, l'indicateur DC est configuré pour indiquer si une cellule prend en charge une double connectivité et est en outre configuré pour indiquer si une pluralité de Réseaux Mobiles Terrestres Publics, PLMN, prennent en charge la double connectivité, et la cellule est partagée avec la pluralité de PLMN ; et
la transmission (S12) du bloc d'informations système à un équipement utilisateur, UE ;
**caractérisé en ce que** le procédé comprend en outre :
lorsque l'indicateur DC indique qu'une cellule utilisant une technologie de réseau d'accès radio prend en charge une double connectivité pour un réseau hétérogène, la configuration de la double connectivité pour le réseau hétérogène pour l'UE sur la base d'un rapport de mesure concernant une autre cellule pour une autre technologie de réseau d'accès radio envoyé par l'UE ;
dans lequel chaque type de double connectivité est affecté à un indicateur DC unique, chaque indicateur DC comprend au moins un ensemble de bits, un nombre dudit au moins un ensemble de bits est égal à un nombre des PLMN, chaque ensemble de bits comprend un bit, et une valeur de chaque bit est configurée pour indiquer si le PLMN correspondant prend en charge un type correspondant de double connectivité.

2. Procédé selon la revendication 1, dans lequel ledit au moins un ensemble de bits est mis en correspondance avec le PLMN dans un premier ordre, dans lequel le premier ordre correspond à un second ordre dans lequel les PLMN sont agencés dans un élément d'information Liste d'Identités PLMN.

3. Procédé selon les revendications 1, dans lequel les informations système comprennent le type1 de bloc d'informations système et d'autres types de blocs d'informations système, et l'indicateur DC est configuré dans le bloc d'informations système avec un type autre que le type1.

4. Procédé d'information système, comprenant :
la réception (S21) d'un bloc d'informations système, dans lequel le bloc d'informations système comprend un indicateur de double connectivité, DC, et dans lequel la double connectivité comprend une pluralité de types de double connectivité, l'indicateur DC est configuré pour indiquer si une cellule prend en charge une double connectivité et configuré en outre pour indiquer si une pluralité de réseaux mobiles terrestres publics, PLMN, prennent en charge la double connectivité, et l'élément est partagé avec la pluralité de PLMN ; et
l'obtention (S22) de l'indicateur DC sur la base du bloc d'informations système ;
**caractérisé en ce que** le procédé comprend en outre :
lorsque l'indicateur DC indique qu'une cellule utilisant une technologie de réseau d'accès radio prend en charge une double connectivité pour un réseau hétérogène, la mesure d'une autre cellule pour une autre technologie de réseau d'accès radio afin d'obtenir un rapport de mesure, et l'envoi du rapport de mesure à une station de base afin de configurer la double connectivité pour le réseau hétérogène ;
dans lequel chaque type de double connectivité est affecté à un indicateur DC unique, chaque indicateur DC comprend au moins un ensemble de bits, un nombre dudit au moins un ensemble de bits est égal à un nombre des PLMN, chaque ensemble de bits comprend un bit, et une valeur de chaque bit est configurée pour indiquer si le PLMN correspondant prend en charge un type correspondant de double connectivité.

5. Procédé selon la revendication 4, dans lequel ledit au moins un ensemble de bits est mis en correspondance avec les PLMN dans un premier ordre, dans lequel le premier ordre correspond à un second ordre dans lequel les PLMN sont agencés dans un élément d'information Liste d'Identités PLMN.

6. Procédé selon la revendication 4, dans lequel les informations système comprennent le type1 de bloc d'informations système et d'autres types de blocs d'informations système, et l'indicateur DC est configuré dans le bloc d'informations système avec un type autre que le type1.

7. Procédé selon la revendication 4, dans lequel l'un de la pluralité de types de double connectivité est la Double Connectivité E-UTRA-NR, EN-DC.

8. Procédé selon la revendication 7, dans lequel l'élément est une cellule NR ; et le procédé comprend en outre :
la mesure de la cellule NR afin d'obtenir un rapport de mesure lorsque l'indicateur DC obtenu indique que la cellule NR prend en charge l'EN-DC.

9. Équipement utilisateur, comprenant un processeur en communication avec une mémoire, le processeur étant configuré pour exécuter des instructions stockées dans la mémoire qui amènent le processeur à mettre en œuvre le procédé d'information système selon l'une quelconque des revendications 4-8.

10. Support lisible par ordinateur stockant des instructions qui, lorsqu'elles sont exécutées par un processeur, amènent le processeur à mettre en œuvre le procédé d'information système selon l'une quelconque des revendications 4-8.
